# EUROPEAN PATENT APPLICATION

(11) **EP 4 509 393 A1**
(43) Date of publication of application: **19.02.2025**
(21) Application number: 23382845.8
(22) Date of filing: 13.08.2023
(51) Int. Cl.: B62K 3/04, B62K 3/08, B62K 19/36

(54) **BICYCLE FRAME**

(71) Applicant: ORBEA, S. COOP., 48269 Mallabia (BIZKAIA) (ES)
(72) Inventor: Ortuondo Gorostiza-Goiza, Jon Ander, 48960 Galdakao, BIZKAIA (ES); Escarihuela Alcoverro, Arnau, 48006 Bilbao. BIZKAIA (ES)
(74) Representative: Cueto, Sénida

(57) **Abstract**

The invention relates to a bicycle frame (10), with a front part (11) defined by a head tube (1), a down tube (2), a top tube (3) and a strut tube (7) and a rear part (12) defined by the strut tube (7) and a set of tubes connecting to a rear wheel axle, usually a pair of seat stays (5) and a pair of chain stays (6). The frame also comprises a cantilevered seat tube (4), between an upper end (4a) and a lower end (4b). The seat tube (4) is connected to the strut tube (7), to the top tube (3) and to the seat stays (5). In the frame (10) of the invention, the top tube (3), the seat tube (4) and also the strut tube (7) and the seat stays (5) are connected to the lower end of the seat tube (4). This geometry is particularly advantageous for reducing the vertical stiffness and the bending stiffness of the seat tube (4).

## Description

### Technical field

The present invention relates to a bicycle frame with improved stiffness, in particular with a reduction in the stiffness of the seat tube.

### Prior art

A bicycle is a well-known transport vehicle comprising principally a frame, two wheels connected in a rotatable manner to the frame, a pedal system for transmitting the rotation to the wheels, a handlebar connected in a rotatable manner to the frame and connected to the front wheel by means of a fork to cause the front wheel to rotate, a seat fixed to the frame, a braking system acting on the wheels and, optionally, front and/or rear wheel suspension systems. In order to fix the seat to the frame, the bicycle is usually additionally provided with a part called seat post, with one end fixed to the seat and the other end inserted into a portion of the seat tube of the frame.

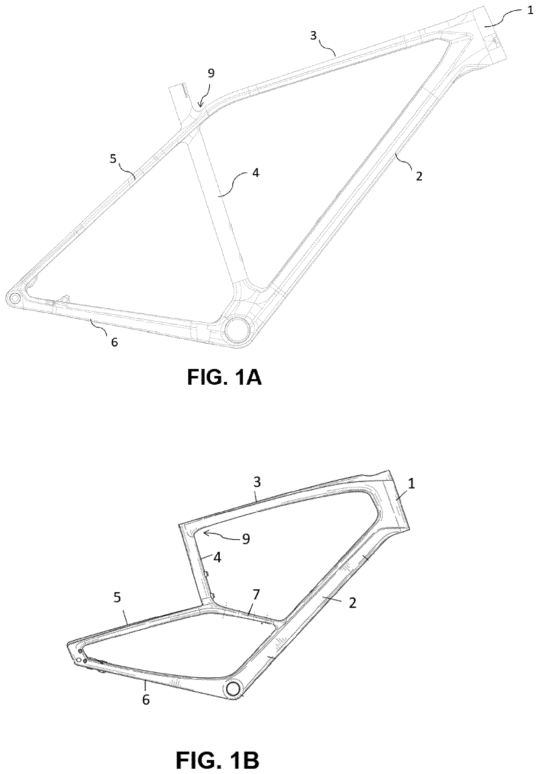

The geometry of a conventional frame, consisting of a series of tubes with a given arrangement, configuration and relative orientation, is also known. In particular, frames comprising a front triangle and a rear triangle, such as the frame shown in Figure 1A, are common in the state of the art. The front triangle is commonly referred to as the front part of the frame defined by the head tube, the down tube or diagonal tube, the top tube and the seat tube. The head tube is penetrated by the front fork which is rotationally attached to the frame. On the other hand, the rear triangle is the rear part of the frame usually defined by the seat tube and two seat stays and two chainstays joined to the rear wheel axle.

The frame geometry has a decisive influence on the stiffness and dynamics of the bicycle. In order to improve frame stiffness, some bicycle frames have a less typical tube configuration that does not match the tube configuration described above. A known solution for reducing frame stiffness is described in US2023034772A1 publication. This patent application discloses a frame provided with a shortened or interrupted seat tube, as illustrated in Figure 1B, which is approximately half the length of a conventional seat tube that descends to connect with the bottom bracket. In this US invention, the seat tube extends from an upper end connected to the top tube of the frame to a lower end, without connecting to the bottom bracket. The frame further comprises a strut tube extending forward from the lower end of the seat tube, connecting the seat tube to the down tube. The removal of the lower portion of the seat tube and the incorporation of the strut tube, between the lower end of the seat tube and the down tube, contribute to reducing the vertical stiffness of the bicycle, thus increasing rider comfort.

Bicycles without a seat tube between the front and rear triangles are also known in the state of the art. In principle, the removal of the seat tube allows for a reduction in seat stiffness, as the resulting frame tube configuration allows for greater flex and vibration absorption. However, such solutions without the seat tube often require oversizing of other frame tubes, in particular the top tube and seat stays. This oversizing increases the weight of the bicycle and worsens the final stiffness.

It is the objective of the invention to provide a bicycle frame, as an alternative to existing frames, provided with a seat tube with reduced stiffness.

### Brief description of the invention

The object of the invention is a bicycle frame with a front part defined by a head tube, a down tube, a top tube and an additional strut tube. The frame also comprises a rear part defined by the strut tube and by a set of connecting tubes to a rear wheel axle, typically a pair of upper seat stays and a pair of lower chainstays. Additionally, the frame comprises a seat tube, connected to the strut tube, connected to the top tube and connected to at least one of the upper connecting tubes to the rear wheel axle. The seat tube is provided with an upper end and a lower end. In the frame of the invention, the top tube extends from the head tube to the lower end of the seat tube, the strut tube extends from the lower end of the seat tube towards the down tube and the seat tube extends from its lower end to its upper end, so that the top tube, the seat tube and also the strut tube are connected to the lower end of the seat tube. In this way, the lower end of the seat tube forms the junction between the seat tube, the seat stays, the strut tube and also the top tube.

Thanks to the frame geometry of the invention, it is possible to reduce the stiffness of the seat tube improving rider comfort, by reducing stiffness in two ways.

On the one hand, the vertical stiffness of the seat tube is reduced because the frame is provided with an interrupted seat tube that does not connect to the lower part of the frame, where the bottom bracket is usually located. The incorporation of the strut tube provides adequate strength to the frame.

Additionally, the frame of the invention incorporates a top tube particularly advantageous in that it extends to the lower end of the seat tube, unlike other known configurations in which the top tube is connected to the seat tube at its upper end or at an intermediate point between the upper end and the lower end of the seat tube, thereby restricting the flexing of the seat tube to a greater extent than in the invention. In contrast, in the present invention, the lower end of the seat tube forms the junction point between the seat tube, the seat stays, the strut tube and also the top tube, so that none of these tubes is connected to the seat tube above its lower end. In this way, the seat tube is cantilevered along its entire length, thus the bending stiffness of the seat tube is optimised.

In the context of the present invention, the lower end of the seat tube shall be interpreted as the lower part of the seat tube which forms the junction between the aforementioned tubes above which none of the tubes is connected to the seat tube. The person skilled in the art understands that this connection does not imply an exact geometrical point, just as the so-called front triangle does not constitute a geometrical triangle in the strict sense.

The combined reduction in vertical stiffness and bending stiffness of the seat tube of the invention provides increased comfort and reduced fatigue for the rider when seated in the bicycle seat. This greater comfort is achieved without resorting to other less convenient methods, such as lowering the tyre pressure which increases the risk of a puncture or the incorporation of a more flexible and bulky seat which may worsen pedalling performance, or in the most extreme case the incorporation of a rear suspension system which complicates and makes the bicycle more expensive and requires more frequent maintenance.

In addition, the configuration of the top tube, which descends to the lower end of the seat tube, also contributes to improved accessibility to the bicycle, similar to other conventional bikes without a top tube, which are preferred by some users because of the greater ease of getting on and off the bicycle compared to bicycles where the top tube is located higher up.

### Brief description of drawings

The details of the invention are shown in the accompanying figures, which do not intend to limit the scope of the invention:
- Figure 1A shows a front view of a Prior Art frame with a typical geometry including a front triangle and a rear triangle.
- Figure 1B shows another known frame configuration that may provide a reduction in frame stiffness.
- Figure 2 shows a front view of an embodiment of the bicycle frame according to the invention.
- Figure 3 shows a perspective view of the frame of Figure 2.
- Figures 4, 5 and 6 show a perspective view and side views of the connection area between the seat tube, the top tube, the strut tube and the seat stays, corresponding to the embodiment of Figure 2.

### Detailed description of the invention

Figure 1A shows a front view of a Prior Art bicycle frame with a conventional geometry, consisting of a front triangle and a rear triangle. The front triangle is defined by the head tube (1), the down or diagonal tube (2), the top tube (3) and the seat tube (4). The rear triangle is defined by the seat tube (4), the two seat stays (5) and the two chain stays (6).

The present invention is an evolution from the conventional frame geometry referred to above. The development that has given rise to the invention is a solution designed initially for an urban electric bicycle, devoid of a specific suspension system by means of shock absorbers or other means, but still with reduced stiffness to provide greater comfort for the rider. In particular, the aim was to reduce the vertical stiffness of the seat tube, as this seat tube is a critical component in this type of bicycle. The reason is that urban bicycles are focused on comfort and have a geometry such that the distribution of weight between the three points of support (handlebar, seat and pedals) is more relevant in the seat, as the user adopts a more upright position and with less support on the handlebar, so that it is not necessary to exert too much force with the arms.

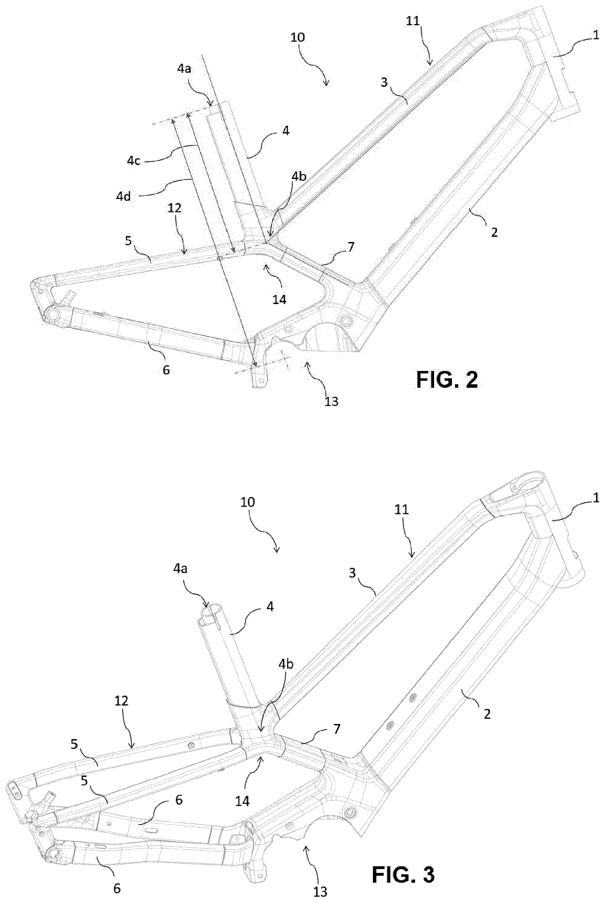

Figures 2 and 3 show respectively a lateral elevation view and a perspective view of a particular embodiment of the bicycle frame according to the invention. As can be seen in the figures, the frame (10) comprises a triangle or front part (11) and a rear part (12). The front part (11) is defined by a head tube (1), a down tube (2), a top tube (3) and an additional strut tube (7). The seat tube (4), provided with an upper end (4a) and a lower end (4b), has an interrupted configuration so that it does not connect with the lower area (13) of the frame (10). A strut tube (7) extending from the lower end (4b) of the seat tube (4) towards the down tube (2) increases the strength of the frame (10).

As shown in Fig. 3, the rear part (12) of the frame (10) is defined by the strut tube (7), a pair of seat stays (5) extending from the lower end (4b) of the seat tube (4) to the rear wheel axle (not shown in figures) and a pair of chain stays (6) also extending to the rear wheel axle from the lower area (13) of the frame (10). Normally, the two seat stays (5) and the two chain stays (6) define the referred set of connecting tubes to the rear wheel axle.

Optionally, the lower area (13) of the frame (10) houses a central assistance motor, as in the case of an electric bicycle comprising the frame (10) of the embodiment of Figures 2 to 5. Alternatively, in other types of bicycles compatible with the invention, the lower area (13) houses a conventional bottom bracket shell. In the embodiment of figures, the strut tube (7) extends from the lower end (4b) of the seat tube (4) towards the down tube (2), being connected to the lower area (13) where the motor bracket (8) is located. In alternative embodiments, the strut tube (7) extends to the down tube (2).

As also illustrated in Figures 2 and 3, the seat tube (4) is connected to the strut tube (7) and connected to the top tube (3) and connected the seat stays (5). The frame (10) of the invention provides a particularly advantageous top tube (3) extending from the head tube (1) to the lower end (4b) of the seat tube (4), so that the top tube (3), the seat tube (4) and also the strut tube (7) and the seat stays (5) are all connected to the lower end of the seat tube (4).

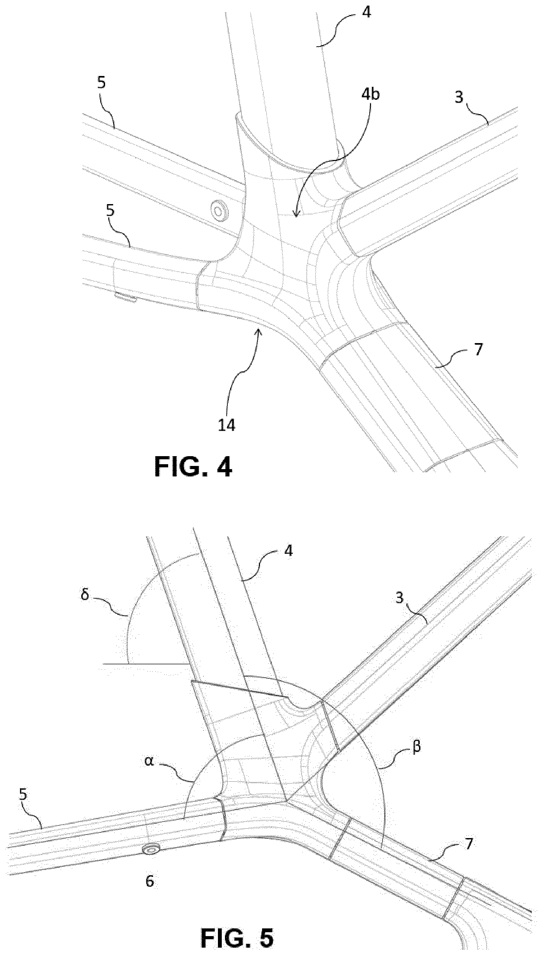

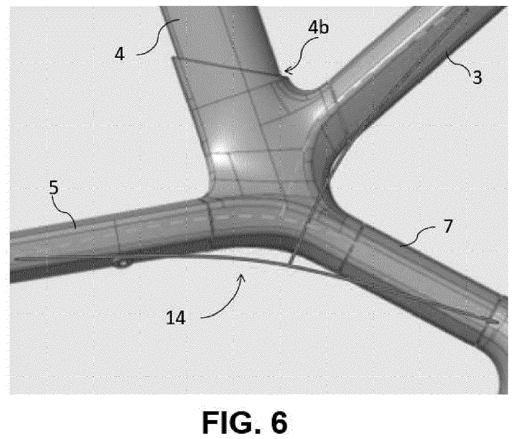

Figures 4 to 6 illustrate in greater detail the lower end (4b) of the seat tube (4) and the junction area (14) between the seat tube (4), the top tube (3), the strut tube (7) and the seat stays (5) of the frame (10). Fig. 6, in particular, illustrates a factored approximation of the deformation allowed by the tube configuration of the invention, where the strut tube (7) and the seat stays (5) work practically only in bending, and where the compression, tensile and/or torsional loads being much less relevant.

Optionally, as in the embodiment of Fig. 5, the angle α formed between the seat tube (4) and the seat stays (5) is comprised between 70° and 90°. In this way, the seat stays (5) work in almost pure flexion with a consequent favourable effect on the rider's comfort. Also optionally, the angle β between the seat tube (4) and the strut tube (7) is comprised between 120° and 150°.

Optionally, with reference to Fig. 2, the length (4c) of the seat tube (4), i.e. the length between the edge of the upper end (4a) and the edge of the lower end (4b) of the cantilevered seat tube (4), is at least 30% of the geometric length (4d) of the seat tube (4). The aforementioned geometric length (4d), which defines the size of the bicycle, usually refers to the distance between the upper end of the seat tube and the bottom bracket. In other words, the geometric length is used as a measure of the different sizes of the same bicycle model. The adjustment of this minimum percentage of 30% for the length (4c) of the seat tube (4), with respect to the geometric length (4d), favours compliance with the appropriate angle intervals between the seat tube (4) and the seat stays (5) and between the seat tube (4) and the strut tube (7). It also provides an aesthetically balanced design.

Optionally, the angle δ formed by the seat tube (4) with respect to the horizontal is comprised between 65° and 75° which provides a good balance between ergonomics and fatigue resistance for the seat tube (4) itself which, being cantilevered, is subjected to a more demanding state of loading.

As explained earlier in this document, the extension of the top tube (3) to the lower end (4b) of the seat tube (4) and the formation of a single junction area (14) between the seat tube (4), the top tube (3), the strut tube (7) and the seat stays (5) contribute positively to the reduction of the stiffness of the seat tube (4). Additionally, in the frame (10) according to the invention, the junction (9) of the top tube (3) with an upper part of the seat tube (4), usually present in conventional solutions, disappears (see Fig. 1A and Fig. 1B). This junction (9) may be critical in some applications, depending on the material of manufacture of the frame, and may require the addition of another tube or any other additional strut element that would undermine the stiffness reduction objective. In the frame (10) of the invention, the top tube (3) is subjected to a lower load with respect to other frames of the Prior Art such as the one represented for example in Fig. 1B. This reduction in the functional requirements of the top tube (3) of the invention can be used to reduce the weight of the frame (10), constituting an added advantage.

In summary, the invention provides a bicycle frame (10) which simultaneously has all of the following advantages:
- reduction of the vertical stiffness of the seat tube (4),
- reduction of the bending stiffness of the seat tube (4),
- improving accessibility to bicycle and
- reduction of the required structural function of the top tube (3).

The material used for the manufacture of the frame can be aluminium, carbon fibre or other materials that allow the characterising reduction of stiffness provided by the invention, the material of the frame not constituting, however, a limiting aspect for the present invention.

The configuration of the frame tubes of the invention allows variations with respect to the geometry of the particular embodiment of Figures 2-6, provided that the alternatives still allow a reduction of the vertical and bending stiffness of the seat tube. Thus, bicycles comprising the following elements are compatible with the frame of the invention:
- attachment of the strut tube (7) to the lower area (13) (housing an motor bracket or bottom bracket shell) or, alternatively, attachment of the strut tube (7) to the down tube (2),
- configuration of the seat stays (5) and chain stays (6) different from that shown in the figures.

The invention also relates to a bicycle comprising the characterising frame (10) of the invention.

## Claims

1. Bicycle frame (10), comprising:
- a front part (11) defined by a head tube (1), a down tube (2), a top tube (3) and a strut tube (7);
- a rear part (12) defined by the strut tube (7) and by a set of connecting tubes to a rear wheel axle, and
- a seat tube (4), connected to the strut tube (7), to the top tube (3) and connected to at least one of the connecting tubes to the rear wheel axle, the seat tube (4) being provided with an upper end (4a) and a lower end (4b), wherein
- the top tube (3) extends from the head tube (1) to the lower end (4b) of the seat tube (4),
- the strut tube (7) extends from the lower end (4b) of the seat tube (4) towards the down tube (2),
- the seat tube (4) extends from its lower end (4b) to its upper end (4a), so that
- the top tube (3), the seat tube (4) and the strut tube (7) are connected to the lower end of the seat tube (4).

2. Frame (10), according to claim 1, wherein the rear part (12) is defined by the strut tube (7), a pair of seat stays (5) extending from the lower end (4b) of the seat tube (4) towards the rear wheel axle of the bicycle and a pair of chain stays (6) extending from a lower area (13) of the frame (10) towards the rear wheel axle.

3. Frame (10), according to claim 1, wherein the lower area (13) comprises a motor bracket (8).

4. Frame (10), according to claim 3, wherein the strut tube (7) extends to the motor bracket (8).

5. Frame (10), according to claim 1, wherein the lower area (13) comprises a bottom bracket shell.

6. Frame (10), according to claim 5, wherein the strut tube (7) extends to the down tube (2).

7. Frame (10), according to any one of the preceding claims, wherein the angle α between the seat tube (4) and the rear wheel axle connection tubes connected to the seat tube (4), normally the seat stays (5), is between 70° and 90°.

8. Frame (10), according to any one of the preceding claims, wherein the angle β between the seat tube (4) and the strut tube (7) is between 120° and 150°.

9. Frame (10), according to any one of the preceding claims, wherein the length (4c) of the seat tube (4) is at least 30% of the geometric length (4d) of the seat tube (4) defining the size of the bicycle.

10. Frame (10), according to any one of the preceding claims, wherein the angle δ formed by the seat tube (4) with respect to the horizontal is between 65° and 75°.

11. Frame (10), according to claim 1, wherein the angle α between the seat tube (4) and the set of connecting tubes to the rear wheel axle which are connected to the seat tube (4), typically the seat stays (5), is between 70° and 90°, the angle β between the seat tube (4) and the strut tube (7) is between 120° and 150°, the length (4c) of the seat tube (4) is at least 30% of the geometric length (4d) of the seat tube (4) defining the size of the bicycle, and the angle δ formed by the seat tube (4) with respect to the horizontal is between 65° and 75°.

12. Bicycle comprising a frame (10) according to any one of the preceding claims.
